# EUROPEAN PATENT APPLICATION

(11) **EP 4 633 086 A1**
(43) Date of publication of application: **15.10.2025**
(21) Application number: 25150928.7
(22) Date of filing: 09.01.2025
(51) Int. Cl.: H04L 9/40, H04L 69/22, H04L 41/16, H04L 43/026, G06N 20/00

(54) **SYSTEMS AND METHODS FOR IMPLEMENTING MACHINE LEARNING NETWORK ALGORITHMS IN A DATA PLANE**

(30) Priority: 10.04.2024 US 202418632020
(71) Applicant: Altera Corporation, San Jose, CA 95134 (US)
(72) Inventor: KUMAR, Anil, 560035 Bengaluru, Karnataka (IN); BODAS, Anand, 560008 Bangalore, Karnataka (IN); VINCENT SOLOMON, Joseph Maria Jaison, 560035 Bangalore, Karnataka (IN); RAGHUPATRUNI, Madhusudana, 560130 Bangalore, Karnataka (IN); AIMANGALA NAGARAJA SETTY, Ravikumar, 560034 Bangalore, Karnataka (IN); PADUBIDRI, Sanjay, 560041 Bangalore, Karnataka (IN)
(74) Representative: Viering, Jentschura & Partner mbB Patent- und Rechtsanwälte

(57) **Abstract**

Systems or methods of the present disclosure may provide an integrated circuit system including data plane circuitry that includes a packet processing pipeline and extraction circuitry, wherein the extraction circuitry is configurable to extract one or more features of a packet via the packet processing pipeline. The integrated circuit system also includes inferencing circuitry configurable to perform machine learning inferencing based on the one or more features.

## Description

### BACKGROUND

The present disclosure relates generally to a system architecture for performing feature extraction, flow processing, machine learning (ML) model selection, and/or artificial intelligence (AI) ML inferencing on an integrated circuit device.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Many network functionalities may be implemented using algorithms (e.g., congestion control, classification, anomaly detection, Quality of Service (QoS) policy tuning, and so on) in a data plane or a control plane of an integrated circuit device. However, deploying the algorithms in the data plane or the control plane may involve feature extraction for a large number of flows, flow classification, model selection, and/or implementation of model inferencing (e.g., AI/ML model inferencing). Feature extraction and model inferencing may be implemented in a central processing unit (CPU), which may result in high latency due to transportation of data to and from the CPU. Alternatively, feature extraction may be implemented in a fixed hardware block, which may result in a higher consumption of computing resources and power. In addition, features utilized in solving network problems may vary and sustaining a high throughput for mapping the algorithms to the model may be difficult. Therefore, it may be desirable to enable flexibility for feature extraction, performance of feature selection based on a particular workload, and/or per packet or per flow inferencing in a data pipeline to solve for the network problems.

### BRIEF DESCRIPTION OF THE DRAWINGS

Various aspects of this disclosure may be better understood upon reading the following detailed description and upon reference to the drawings in which:
FIG. 1 is a block diagram of a system used to program an integrated circuit device, in accordance with an embodiment of the present disclosure;
FIG. 2 is a block diagram of the integrated circuit device of FIG. 1, in accordance with an embodiment of the present disclosure;
FIG. 3 is a block diagram of programmable fabric of the integrated circuit device of FIG. 1, in accordance with an embodiment of the present disclosure;
FIG. 4 is an example of circuitry employed by the integrated circuit device of FIG. 1, including extraction circuitry and AI/ML circuitry, in accordance with an embodiment of the present disclosure;
FIG. 5 is a block diagram of a first flow of processes or a second flow of processes performed by the example circuitry employed by the integrated circuit device of FIG. 1, in accordance with an embodiment of the present disclosure.
FIG. 6 is a packet processing pipeline of the integrated circuit device of FIG. 1, in accordance with an embodiment of the present disclosure;
FIG. 7 is a flowchart of an example method for feature extraction via the data plane circuitry, in accordance with an embodiment of the present disclosure;
FIG. 8 is an example illustration of the extraction circuitry and the packet processing pipeline using an on-chip memory or an off-chip memory, in accordance with an embodiment of the present disclosure;
FIG. 9 is an example illustration of a data plane memory partition, in accordance with an embodiment of the present disclosure; and
FIG. 10 is a block diagram of a data processing system that may incorporate the integrated circuit device of FIG. 1, in accordance with an embodiment of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

The present systems and techniques relate to embodiments for generating features from an incoming packet stream, normalizing the features, and interfacing with an inference engine to perform per packet or per flow inferencing. For example, an integrated circuit device may employ a system architecture, which includes feature extraction circuitry and inferencing circuitry (e.g., AI/MI, inferencing circuitry). In an embodiment, the integrated circuit device may receive a packet (or a packet stream) at a network interface of the integrated circuit device. The integrated circuit device may duplicate the packet or create a copy of the packet and provide the copy of the packet and associated metadata via a replication engine and provide the copy of the packet to the extraction circuitry. In another embodiment, the integrated circuit device may provide the packet to data plane circuitry (e.g., programmable data plane, programmable data plane fabric) to determine types of AI models to implement and/or types of features to extract. The data plane circuitry may then provide the packet and the one or more hints to the extraction circuitry to enable the extraction circuitry to extract the determined types of features.

The extraction circuitry may be implemented as offload processing circuitry or as a co-processing system with a packet processing pipeline of the data plane circuitry. The extraction circuitry may extract (e.g., generate), normalize, and/or transform the features from the packet. For example, the extraction circuitry may extract the features via the packet processing pipeline or via dedicated circuitry. Additionally, the extraction circuitry may include feature vector transformation circuitry for pre-processing and/or normalizing data associated with the packet for the inferencing circuitry. The extraction circuitry may be programmable, which may enable a user to customize the normalization and/or transformation of data. Thus, accuracy of the inferencing circuitry may be improved based on the customized normalized and/or transformed data.

In an embodiment, the extraction circuitry may provide (e.g., send, transmit) the extracted features directly to the inferencing circuitry. The inferencing circuitry may then perform the per packet or per flow inferencing based on the extracted features. For example, the inferencing circuitry may utilize various types of AI models and/or various instances of a single AI model to identify a solution (e.g., generate a result) for a particular network problem. In another embodiment, the extraction circuitry may provide the extracted features to the data plane circuitry of the integrated circuit device. The data plane circuitry may enable analysis of the extracted features to determine a list of AI models to employ with the extracted features. The data plane circuitry may then provide the list of the AI models and the extracted features to the inferencing circuitry perform the per packet or per flow inferencing based on the list of the AI models and the extracted features. As such, the system architecture for the integrated circuit device described herein may enable the integrated circuit device to generate high-quality features in a programmable manner, normalize the features, and interface with the inferencing circuitry to perform packet processing (e.g., the per packet or per flow processing) to solve for network problems.

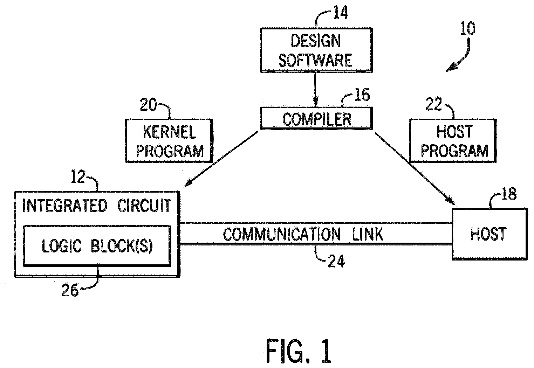

With the foregoing in mind, FIG. 1 is a block diagram of a system 10 that may implement one or more functionalities. For example, a designer may desire to implement functionality, such as the operations of this disclosure, on an integrated circuit device 12 (e.g., a programmable logic device, such as a field programmable gate array (FPGA) or an application specific integrated circuit (ASIC), an integrated circuit system). In some cases, the designer may specify a high-level program to be implemented, such as an OpenCL^{®} program or SYCL^{®}, which may enable the designer to more efficiently and easily provide programming instructions to configure a set of programmable logic cells for the integrated circuit device 12 without specific knowledge of low-level hardware description languages (e.g., Verilog or VHDL). For example, since OpenCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12. Additionally or alternatively, a subset of the high-level program may be implemented using and/or translated to a lower level language, such as a register-transfer language (RTL).

The designer may implement high-level designs using design software 14, such as a version of INTEL^{®} QUARTUS^{®} by INTEL CORPORATION. The design software 14 may use a compiler 16 to convert the high-level program into a lower-level description. In some embodiments, the compiler 16 and the design software 14 may be packaged into a single software application. The compiler 16 may provide machine-readable instructions representative of the high-level program to a host 18 and the integrated circuit device 12. The host 18 may receive a host program 22 which may be implemented by the kernel programs 20. To implement the host program 22, the host 18 may communicate instructions from the host program 22 to the integrated circuit device 12 via a communications link 24, which may be, for example, direct memory access (DMA) communications or peripheral component interconnect express (PCIe) communications. In some embodiments, the kernel programs 20 and the host 18 may enable configuration of a logic block 26 on the integrated circuit device 12. The logic block 26 may include circuitry and/or other logic elements and may be configured to implement arithmetic operations, such as addition and multiplication.

The designer may use the design software 14 to generate and/or to specify a low-level program, such as the low-level hardware description languages described above. For example, the design software 14 may be used to map a workload to one or more routing resources of the integrated circuit device 12 based on a timing, a wire usage, a logic utilization, and/or a routability. Additionally or alternatively, the design software 14 may be used to route first data to a portion of the integrated circuit device 12 and route second data, power, and clock signals to a second portion of the integrated circuit device 12. Further, in some embodiments, the system 10 may be implemented without a host program 22 and/or without a separate host program 22. Moreover, in some embodiments, the techniques described herein may be implemented in circuitry as a non-programmable circuit design. Thus, embodiments described herein are intended to be illustrative and not limiting.

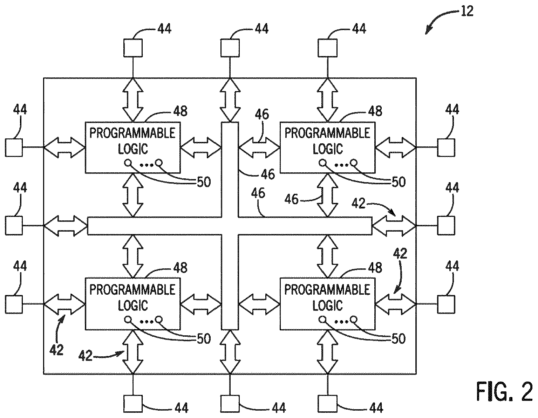

Turning now to a more detailed discussion of the integrated circuit device 12, FIG. 2 is a block diagram of an example of the integrated circuit device 12 as a programmable logic device, such as a field-programmable gate array (FPGA). Further, it should be understood that the integrated circuit device 12 may be any other suitable type of programmable logic device (e.g., a structured ASIC such as eASIC^{™} by Intel Corporation ASIC and/or application-specific standard product). The integrated circuit device 12 may have input/output circuitry 42 for driving signals off the device and for receiving signals from other devices via input/output pins 44. Interconnection resources 46, such as global and local vertical and horizontal conductive lines and buses, and/or configuration resources (e.g., hardwired couplings, logical couplings not implemented by designer logic), may be used to route signals on integrated circuit device 12. Additionally, interconnection resources 46 may include fixed interconnects (conductive lines) and programmable interconnects (i.e., programmable connections between respective fixed interconnects). For example, the interconnection resources 46 may be used to route signals, such as clock or data signals, through the integrated circuit device 12. Additionally or alternatively, the interconnection resources 46 may be used to route power (e.g., voltage) through the integrated circuit device 12. Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of programmable logic 48.

Programmable logic devices, such as the integrated circuit device 12, may include programmable elements 50 with the programmable logic 48. In some embodiments, at least some of the programmable elements 50 may be grouped into logic array blocks (LABs). As discussed above, a designer (e.g., a user, a customer) may (re)program (e.g., (re)configure) the programmable logic 48 to perform one or more desired functions. By way of example, some programmable logic devices may be programmed or reprogrammed by configuring programmable elements 50 using mask programming arrangements, which is performed during semiconductor manufacturing. Other programmable logic devices are configured after semiconductor fabrication operations have been completed, such as by using electrical programming or laser programming to program the programmable elements 50. In general, programmable elements 50 may be based on any suitable programmable technology, such as fuses, anti-fuses, electrically programmable read-only-memory technology, random-access memory cells, mask-programmed elements, and so forth.

Many programmable logic devices are electrically programmed. With electrical programming arrangements, the programmable elements 50 may be formed from one or more memory cells. For example, during programming, configuration data is loaded into the memory cells using input/output pins 44 and input/output circuitry 42. In one embodiment, the memory cells may be implemented as random-access-memory (RAM) cells. The use of memory cells based on RAM technology as described herein is intended to be only one example. Further, since these RAM cells are loaded with configuration data during programming, they are sometimes referred to as configuration RAM cells (CRAM). These memory cells may each provide a corresponding static control output signal that controls the state of an associated logic component in programmable logic 48. In some embodiments, the output signals may be applied to the gates of metal-oxide-semiconductor (MOS) transistors within the programmable logic 48.

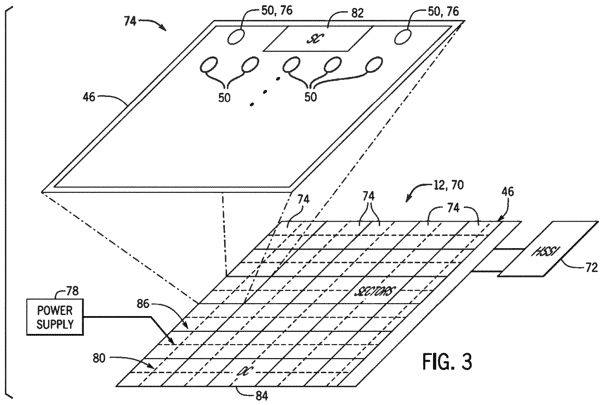

The integrated circuit device 12 may include any programmable logic device such as a field programmable gate array (FPGA) 70, as shown in FIG. 3. For the purposes of this example, the FPGA 70 is referred to as a FPGA, though it should be understood that the device may be any suitable type of programmable logic device (e.g., an application-specific integrated circuit and/or application-specific standard product). In one example, the FPGA 70 is a sectorized FPGA of the type described in U.S. Patent Publication No. 2016/0049941, "Programmable Circuit Having Multiple Sectors," which is incorporated by reference in its entirety for all purposes. The FPGA 70 may be formed on a single plane. Additionally or alternatively, the FPGA 70 may be a three-dimensional FPGA having a base die and a fabric die of the type described in U.S. Patent No. 10,833,679, "Multi-Purpose Interface for Configuration Data and Designer Fabric Data," which is incorporated by reference in its entirety for all purposes.

In the example of FIG. 3, the FPGA 70 may include transceiver 72 that may include and/or use input/output circuitry, such as input/output circuitry 42 in FIG. 2, for driving signals off the FPGA 70 and for receiving signals from other devices. Interconnection resources 46 may be used to route signals, such as clock or data signals, through the FPGA 70. The FPGA 70 is sectorized, meaning that programmable logic resources may be distributed through a number of discrete programmable logic sectors 74. Programmable logic sectors 74 may include a number of programmable elements 50 having operations defined by configuration memory 76 (e.g., CRAM). A power supply 78 may provide a source of voltage (e.g., supply voltage) and current to a power distribution network (PDN) 80 that distributes electrical power to the various components of the FPGA 70. Operating the circuitry of the FPGA 70 causes power to be drawn from the power distribution network 80.

There may be any suitable number of programmable logic sectors 74 on the FPGA 70. Indeed, while 29 programmable logic sectors 74 are shown here, it should be appreciated that more or fewer may appear in an actual implementation (e.g., in some cases, on the order of 50, 100, 500, 1000, 5000, 10,000, 50,000 or 100,000 sectors or more). Programmable logic sectors 74 may include a sector controller (SC) 82 that controls operation of the programmable logic sector 74. Sector controllers 82 may be in communication with a device controller (DC) 84.

Sector controllers 82 may accept commands and data from the device controller 84 and may read data from and write data into its configuration memory 76 based on control signals from the device controller 84. In addition to these operations, the sector controller 82 may be augmented with numerous additional capabilities. For example, such capabilities may include locally sequencing reads and writes to implement error detection and correction on the configuration memory 76 and sequencing test control signals to effect various test modes.

The sector controllers 82 and the device controller 84 may be implemented as state machines and/or processors. For example, operations of the sector controllers 82 or the device controller 84 may be implemented as a separate routine in a memory containing a control program. This control program memory may be fixed in a read-only memory (ROM) or stored in a writable memory, such as random-access memory (RAM). The ROM may have a size larger than would be used to store only one copy of each routine. This may allow routines to have multiple variants depending on "modes" the local controller may be placed into. When the control program memory is implemented as RAM, the RAM may be written with new routines to implement new operations and functionality into the programmable logic sectors 74. This may provide usable extensibility in an efficient and easily understood way. This may be useful because new commands could bring about large amounts of local activity within the sector at the expense of only a small amount of communication between the device controller 84 and the sector controllers 82.

Sector controllers 82 thus may communicate with the device controller 84, which may coordinate the operations of the sector controllers 82 and convey commands initiated from outside the FPGA 70. To support this communication, the interconnection resources 46 may act as a network between the device controller 84 and sector controllers 82. The interconnection resources 46 may support a wide variety of signals between the device controller 84 and sector controllers 82. In one example, these signals may be transmitted as communication packets.

The use of configuration memory 76 based on RAM technology as described herein is intended to be only one example. Moreover, configuration memory 76 may be distributed (e.g., as RAM cells) throughout the various programmable logic sectors 74 of the FPGA 70. The configuration memory 76 may provide a corresponding static control output signal that controls the state of an associated programmable element 50 or programmable component of the interconnection resources 46. The output signals of the configuration memory 76 may be applied to the gates of metal-oxide-semiconductor (MOS) transistors that control the states of the programmable elements 50 or programmable components of the interconnection resources 46.

The programmable elements 50 of the FPGA 40 may also include some signal metals (e.g., communication wires) to transfer a signal. In an embodiment, the programmable logic sectors 74 may be provided in the form of vertical routing channels (e.g., interconnects formed along a y-axis of the FPGA 70) and horizontal routing channels (e.g., interconnects formed along an x-axis of the FPGA 70), and each routing channel may include at least one track to route at least one communication wire. If desired, communication wires may be shorter than the entire length of the routing channel. That is, the communication wire may be shorter than the first die area or the second die area. A length L wire may span L routing channels. As such, a length of four wires in a horizontal routing channel may be referred to as "H4" wires, whereas a length of four wires in a vertical routing channel may be referred to as "V4" wires.

As discussed above, some embodiments of the programmable logic fabric may be configured using indirect configuration techniques. For example, an external host device may communicate configuration data packets to configuration management hardware of the FPGA 70. The data packets may be communicated internally using data paths and specific firmware, which are generally customized for communicating the configuration data packets and may be based on particular host device drivers (e.g., for compatibility). Customization may further be associated with specific device tape outs, often resulting in high costs for the specific tape outs and/or reduced scalability of the FPGA 70.

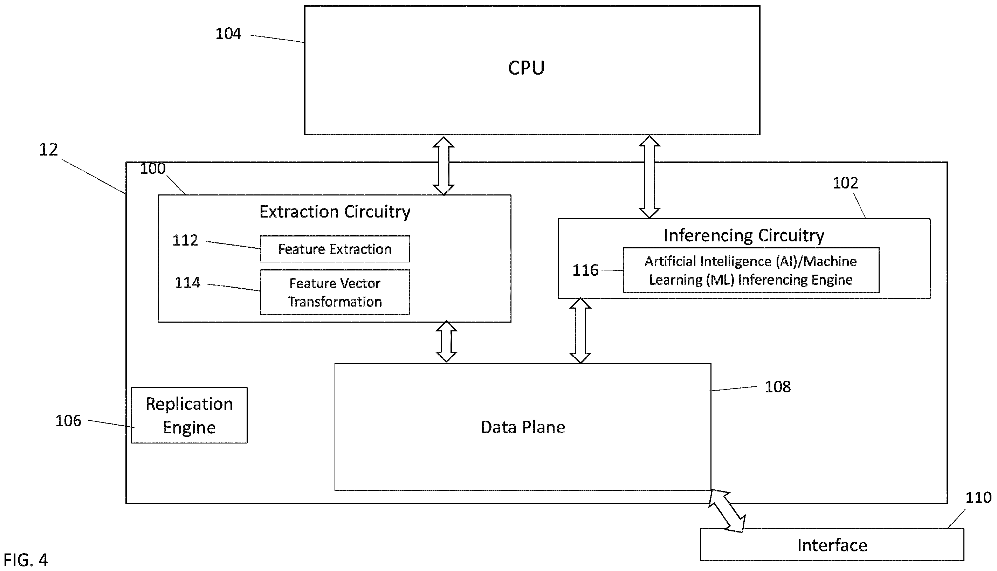

With the foregoing in mind, FIG. 4 is an example of circuitry employed by the integrated circuit device 12 of FIG. 1, including extraction circuitry 100 (e.g., extraction block, extraction component) and inferencing circuitry 102 (e.g., inferencing block, inferencing component), in accordance with an embodiment of the present disclosure. As illustrated, the integrated circuit device 12 may include the extraction circuitry 100, the inferencing circuitry 102, a replication engine 106 (e.g., replication circuitry), data plane circuitry 108 (e.g., programmable data plane), and/or an interface 110 (e.g., a host interface). Further, the integrated circuit device 12 may be in communication with a central processing unit 104 (e.g., CPU circuitry, CPU configuration), which may be the host 18 or at least a part of the host 18.

The extraction circuitry 100 may include feature extraction circuitry 112 and feature vector transformation (FVT) circuitry 114. The inferencing circuitry 102 may include an AI/ML inferencing engine 116. It should be noted that an interconnect between the extraction circuitry 100, the inferencing circuitry 102, and/or the data plane circuitry 108 may be included in a monolithic system or a disaggregated system. In this manner, a packet processing pipeline of the data plane circuitry 108 may operate with the extraction circuitry 100 and/or the inferencing circuitry 102 as co-processors.

The CPU 104 may operate or function the same as or similar to processing circuitry (e.g., a processor, processing system). Indeed, the CPU 104 may obtain (e.g., receive, retrieve) and execute instructions from a memory (e.g., of the integrated circuit device 12 and/or the host 18). For example, the instructions may include calculations, logical operations, data movement, and/or control operations. Further, the CPU 104 may configure, control, and/or coordinate operations of the extraction circuitry 100, the inferencing circuitry 102, the replication engine 106, and/or the data plane circuitry 108. As an example, the CPU 104 can configure and/or control the extraction circuitry 100, the inferencing circuitry 102, and/or the data plane circuitry 108 via software instructions and/or hardware configurations that set up communication protocols, a flow of data, a state of hardware circuitry, and so on.

The extraction circuitry 100 may include the feature extraction circuitry 112 as standalone circuitry (e.g., operated independently) that may operate or function as offload processing circuitry (e.g., feature extraction offload processing circuitry) or as a co-processor to the data plane circuitry 108. The extraction circuitry 100 may extract raw features either via the feature extraction circuitry 112 as the standalone circuitry or through the packet processing pipeline of the data plane circuitry 108 (e.g., via one or more stages of the packet processing pipeline).

The extraction circuitry 100 may then normalize and/or transform one or more features from one or more packets of a workload via the FVT circuitry 114. Indeed, the FVT circuitry 114 may enable derivation of AI/ML amenable features for the data plane circuitry 108 and/or the inferencing circuitry 102. In some embodiments, the integrated circuit device may replicate the FVT circuitry 114 to enable load balancing across the replicas that is driven by performing a hashing function on a unique flow ID. Additionally, the FVT circuitry 114 may perform floating point analysis to determine a minimum and/or maximum standard deviation, a minimum and/or maximum normalization, a mean sum of squares, or any other suitable floating point analysis for the features extracted.

The extraction circuitry 100 may be programmable to control the implementation or execution for a particular set of features. Moreover, the extraction circuitry 100 may extract the features per packet at a line rate and/or per flow for a large number of flows (e.g., one million flows, three million flows, eight million flows, and so on). Additionally or alternatively, the extraction circuitry 100 may maintain history for a set (e.g., batch) of packets for each respective flow of the large number of flows. The extraction circuitry 100 may consume in-band network telemetry device features to consolidate the packet and the features (e.g., flow features).

The extraction circuitry 100 may be embedded on any suitable network device associated with the integrated circuit device 12 (e.g., a network interface card (NIC), a switch, an infrastructure processing unit (IPU), a CPU, a system-on-a-chip (SoC), and so on) as the offload processing circuitry. In an embodiment, the extraction circuitry 100 may be integrated with a packet processing pipeline (e.g., a packet processing system) included in the data plane circuitry 108 of the integrated circuit device 12 as the offload processing circuitry. For example, the packet processing system may include a monolithic system that includes the extraction circuitry 100. Further, the monolithic system may connect with off-chip components, such as a memory, a CPU, and so on, with a high-speed interconnect.

In another embodiment, the extraction circuitry 100 may operate as the standalone circuitry that is connected to any suitable component of the integrated circuit device 12 via the high-speed interconnect. In another embodiment, the extraction circuitry 100 may be integrated as hardware on the integrated circuit device 12 (e.g., an FPGA-based system) and connected with programmable logic fabric and any other suitable component of the integrated circuit device 12 using any suitable interconnect. In yet another embodiment, the extraction circuitry 100 may be integrated as software on the integrated circuit device 12 and realizable on the programmable logic fabric of the integrated circuit device 12.

The extraction circuitry 100 may enable reuse of hardware resources to map the features of each of the packets for each workload. That is, various workloads may share the hardware resources to map the features of each of the packets independently. The packet processing system may dynamically select the features for each of the packets depending on the workload. For packet processing, the extraction circuitry 100 may directly receive a packet from the replication engine 106 and implement packet parsing, flow classification, feature extraction, preprocessing, and/or normalization of the packet.

Alternatively, the extraction circuitry 100 may work as the co-processing system with the packet processing pipeline, where the packet processing pipeline performs parsing and/or classification and streams the data to the extraction circuitry 100 to implement the feature extraction, preprocessing, and normalization of the data. Thus, at least some of the packet processing pipeline stages may be reused to perform the feature extraction, which may result in a reduction of computing resources used for the processing and/or the extraction. Additional details with regard to the extraction circuitry 100 will be described below with respect to FIGS. 4-8.

The inferencing circuitry 102 may be integrated with a suitable network device of the integrated circuit device 12 and may enable mapping of network algorithms to AI/ML models via the AI/ML inferencing engine 116. To provide a solution, the inferencing circuitry 102 may call upon (e.g., invoke, request) one or more models from the data plane circuitry 108. Indeed, the inferencing circuitry 102 may host one or more types of models and/or one or more instances of a single model. Programmability and/or reusability of the inferencing circuitry 102 may be based on the types of models hosted and/or a number of instances of a single model. Further, the inferencing circuitry 102 may dynamically update one or more weights and an architecture of an AI/ML model based on changing network conditions via the AI/ML inferencing engine 116.

The inferencing circuitry 102 may receive a set of features and packet classification data from the extraction circuitry 100 and/or the data plane circuitry 108 and perform inferencing using the set of features and the packet classification data. Further, the inferencing circuitry 102 may perform load balancing across the number of instances of the AI/ML model based on a connection or flow identification (ID). The inferencing circuitry 102 may either chain the AI/ML models or run the AI/ML models in parallel for a particular workload. Additionally, the inferencing circuitry 102 may enable multiple workloads to use a set of AI/ML models simultaneously via orchestration (e.g., computing) from the data plane circuitry 108.

The integrated circuit device 12 may receive an incoming one or more packets at the interface 110. In an embodiment, the integrated circuit device 12 may provide the incoming packets to the replication engine 106 for replication and/or routing. Indeed, the replication engine 106 may receive the packets and make a copy of (e.g., duplicate of) each of the packets along with their associated metadata. Moreover, the replication engine 106 may provide the copy of each of the packets to the extraction circuitry 100.

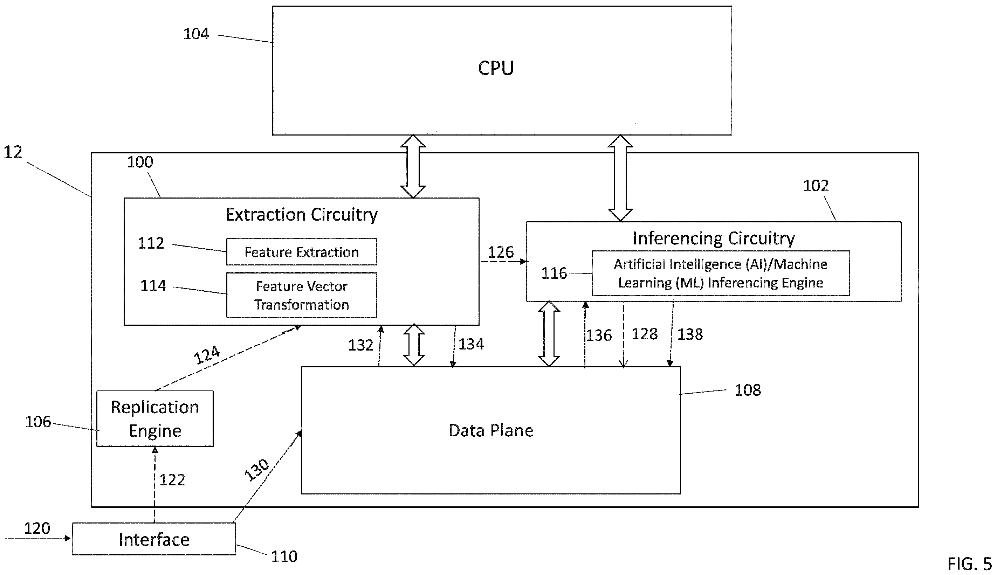

In another embodiment, the integrated circuit device 12 may receive the incoming packets at the interface 110 and provide the packets to the data plane circuitry 108. The data plane circuitry 108 may support dynamic AI/ML models at a line rate. The data plane circuitry 108 may employ the extraction circuitry 100 and/or the inferencing circuitry 102 as parallel to the data plane circuitry or integrated with the packet processing pipeline of the data plane circuitry 108. For example, the integrated circuit device 12 may employ a shim layer to enable the data plane circuitry 108 to communicate with the extraction circuitry 100 and/or inferencing circuitry 102. In some embodiments, the shim layer may also collect resulting data from the inferencing circuitry 102 and write the resulting data to prepend headers (PPHs). Additional details regarding a flow of data via the interface 110, the replication engine 106, the data plane circuitry 108, the extraction circuitry 100, the inferencing circuitry 102, and/or the CPU 104 will be described below with respect to FIG. 5.

FIG. 5 is a block diagram of a first flow of processes or a second flow of processes performed by the example circuitry employed by the integrated circuit device 12 of FIG. 1, in accordance with an embodiment of the present disclosure. It should be noted that the integrated circuit device 12 may perform either the first flow of processes or the second flow of processes. Further, for the first flow of processes, the extraction circuitry 100 and the inferencing circuitry 102 may be implemented as standalone circuitry independent from the data plane circuitry 108. Moreover, for the second flow of processes, the extraction circuitry 100 and the inferencing circuitry 102 may be interconnected (e.g., high-speed interconnect) in parallel with or integrated with the data plane circuitry 108 to enable a hybrid system where the data plane circuitry 108 (e.g., the packet processing pipeline) employs the extraction circuitry 100 and the inferencing circuitry 102 as co-processors and/or send packets with or without replication. Further, it should be noted that the integrated circuit device 12 may instruct the example circuitry described herein to perform operations via any suitable circuitry, such as the CPU 104.

For the first flow of processes, at process 120, the interface 110 may receive one or more packets (e.g., a workload). At process 122, the interface 110 may provide the packets to the replication engine 106. At process 124, the replication engine 106 may receive the packets, duplicate the packets and their associated metadata (e.g., packet length, timestamp, inter-packet arrival time, average size, and so on), and provide the duplicated packets and their associated metadata to the extraction circuitry 100. The extraction circuitry 100 may include the feature extraction circuitry 112, which may operate as standalone circuitry. The extraction circuitry 100 may employ the feature extraction circuitry 112 to extract (e.g., generate) a set of features (e.g., raw features) from the packets. For example, the set of features may include a size of each of the packets, a direction of travel of each of the packets, a timestamp associated with each of the packets, a maximum and a minimum interpacket arrival time, and so on. Additionally, the extraction circuitry 100 may employ the FVT circuitry 114 to normalize and/or transform the set of features, such as performing any suitable pre-processing of the packets for use in the inferencing circuitry 102.

At process 126, the extraction circuitry 100 may provide the set of features to the inferencing circuitry 102. The inferencing circuitry 102 may employ the AI/ML inferencing engine 116 to apply one or more AI/ML models to the set of features to make predictions and/or decisions based on data associated with the set of features. In this manner, the inferencing circuitry 102 may perform inferencing to generate a result that may provide a solution to network problems by employing the AI/ML models to analyze and/or predict network behavior, detect anomalies, optimize performance, and so on, based on the set of features. It should be noted that, in some embodiments, the AI/ML inferencing engine 116 may be implemented in the programmable logic fabric of the integrated circuit device 12. At process 128, the result (e.g., the solution to the network problems) generated by the inferencing circuitry 102 may be provided to the data plane circuitry 108. In some embodiments, based on a configuration of the inferencing circuitry 102, the result may be provided to the CPU 104 in addition to or instead of to the data plane circuitry 108.

As described herein, for the second flow of processes, the extraction circuitry 100, the inferencing circuitry 102, and the data plane circuitry 108 may be interconnected to enable the hybrid system. Thus, at process 130, the interface 110 may provide the packets to the data plane circuitry 108. The data plane circuitry 108 may enable classification of the packets (e.g., by determining a flow identification (ID) and/or other parameters of the packets), a determination or a selection of types of features to extract, generation of one or more hints to provide to the extraction circuitry 100 based on the determination of the types of features to extract, a determination of types of AI/ML models to run, and so on.

At process 132, the data plane circuitry 108 may provide the hints to the extraction circuitry 100. In this manner, the extraction circuitry 100 may extract the set of features via the feature extraction circuitry 112 and perform normalization and/or transformation via the FVT circuitry 114 based on the hints. At process 134, after extraction of the set of features, the extraction circuitry 100 may provide the set of features to the data plane circuitry 108. Further, the data plane circuitry 108 may enable a selection of a list of the AI/ML models to run for inferencing based on a quality of or a feature included in the set of features. At process 136, the data plane circuitry 108 may provide the set of features and the list of the AI/ML models to run to the inferencing circuitry 102. The data plane circuitry 108 may employ the AI/ML inferencing engine 116 to apply the list of selected AI/ML models to the set of features to generate the result. At process 138, the inferencing circuitry 102 may provide the result to the data plane circuitry 108. Accordingly, the system architecture of the integrated circuit device 12 described herein may enable generation of high-quality features, normalization of the features, and inferencing to perform the per packet or per flow processing to solve for network problems.

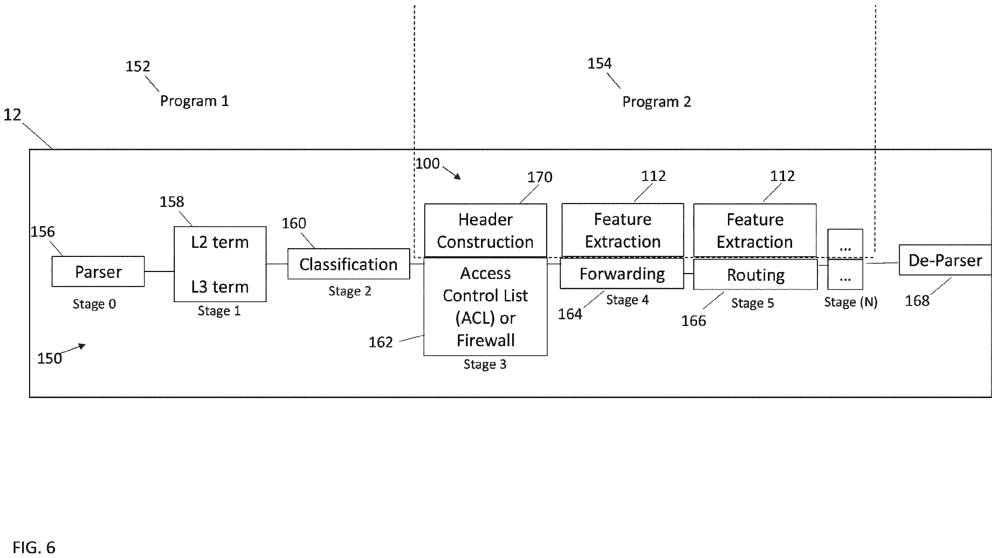

With the foregoing in mind, FIG. 6 is a packet processing pipeline 150 of the integrated circuit device 12 of FIG. 1, in accordance with an embodiment of the present disclosure. That is, the packet processing pipeline 150 may be used for feature extraction. For example, a Programming Protocol-independent Packet Processors (P4) program may enable definition of behavior of network packet processing by implementing a first program 152 (e.g., a first tenant) associated with the packet processing pipeline 150 and a second program 154 (e.g., a second tenant) associated with the extraction circuitry 100. Therefore, the first program 152 may enable packet processing and the second program 154 may enable feature extraction. Further, the first program 152 and the second program 154 may be loaded onto the integrated circuit device 12 during a compiling of the integrated circuit device (e.g., instead of at a run time). A control plane interface (e.g., a management interface for the data plane circuitry 108) may enable merging the first program 152 and the second program 154 into the single packet processing pipeline 150. Indeed, the first program 152 and the second program 154 may be merged to work with defined headers (e.g., unified defined common headers) and to meet hardware constraints.

The first program 152 and/or the second program 154 may enable analysis of headers of packets received by the packet processing pipeline 150 to determine a liveliness of the headers. That is, the first program 152 and/or the second program 154 may determine whether a particular header of the headers is considered live (e.g., active or relevant to) a current processing stage of the packet processing pipeline 150. In this manner, the first program 152 and/or the second program 154 may enable intelligent placement of the extraction circuitry 100 within the packet processing pipeline 150. Accordingly, utilization of existing hardware resources may be improved.

The packet processing pipeline 150 (e.g., the first program 152) may include a number of stages, which may include parser circuitry 156, local terminating circuitry 158, classification circuitry 160, access control list (ACL) or firewall circuitry 162, forwarding circuitry 164, routing circuitry 166 (e.g., Next Hop Tracking (NEXTHOP) protocol, address resolution protocol (ARP), media access control (MAC) protocol), and de-parser circuitry 168. The parser circuitry 156 may be a programmable parser the is programmed to identify a number of headers present in a packet (or each of multiple packets) received by the integrated circuit device 12. Further, the number of headers identified may be combined to provide data indicative of headers and header offsets present in the packet. The local terminating circuitry 158 may determine whether the packet terminates at a certain level (e.g., level 2 (L2) or level 3 (L3)). Indeed, the local terminating circuitry 1158 may determine which layer handles the packet last before the packet is delivered to its destination or discarded.

The classification circuitry 160 may determine a flow identification (ID) for a flow (e.g., a five-tuple flow) with a flow classification table and/or features to extract. The flow classification table may be associated with feature extraction batching or timeout parameters to enable feature extraction at a per flow basis, either per packet, per a number of packets, or per timeout. In this manner, the classification circuitry 160 may enable the hybrid system where feature extraction occurs for some flows for the number of packets while other packets wait for the timeout to occur.

The ACL or firewall circuitry 162 may include a set of rules to permit or deny network traffic based on various criteria (e.g., IP addresses, protocol type, ports, and so on). The forwarding circuitry 164 may enable network devices to make decisions as to how to forward the packet. For example, the forwarding circuitry 164 may be associated with a Forwarding Information Base (FIB) table, which may enable mapping destination addresses to outgoing interfaces and next hop addresses. The routing circuitry 166 may determine the destination of the packet. Moreover, the de-parser circuitry 168 may reconstruct data associated with the packet to its original or specified format for transmission or storage.

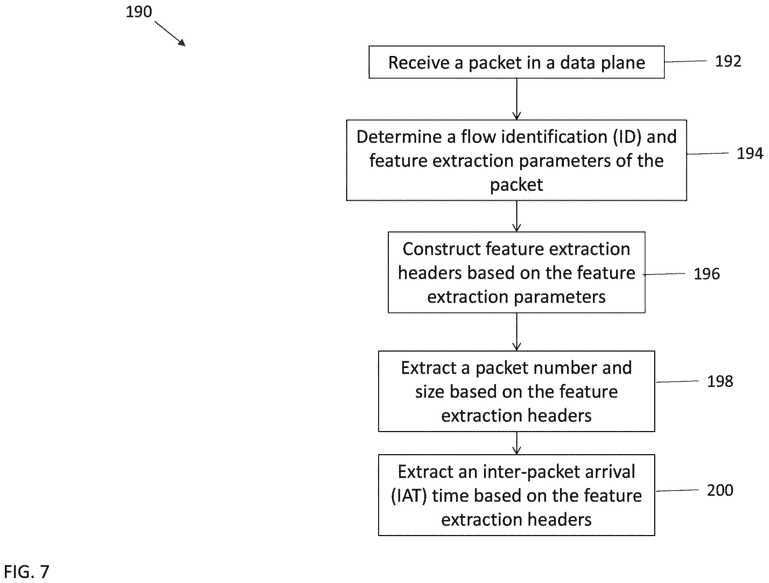

The extraction circuitry 100 (e.g., the second program 154) may include header construction circuitry 170 and the feature extraction circuitry 112. The extraction circuitry 100 may enable extraction of the packet features and accumulation in a local memory of the integrated circuit device 12. The header construction circuitry 170 may determine whether a current packet may initiate feature extraction and/or construction of feature extraction headers. It should be noted that the example circuitry of FIG. 6 described herein is merely illustrative and the packet processing pipeline 150 and the extraction circuitry 100 may include any other suitable circuitry for performing packet processing and/or extraction. Additional details with regarding to the operation of the extraction circuitry 100 collocated with the packet processing pipeline 150 in the data plane circuitry 108 will be described below with respect to FIG. 7.

FIG. 7 is a flow chart of an example method 190 for feature extraction via the data plane circuitry 108, in accordance with an embodiment of the present disclosure. While the method 190 is described using steps in a specific sequence, it should be understood that the present disclosure contemplates that the described steps may be performed in different sequences than the sequence illustrated, and certain described steps may be skipped or not performed altogether.

At block 192, the integrated circuit device 12 may receive one or more packets (e.g., a workload, a flow of packets) at the data plane circuitry 108. The integrated circuit device 12 may then determine whether the packets may be forwarded to another device (e.g., using the local terminating circuitry 158). If the packets are to be used/consumed locally in the integrated circuit device 12, at block 194, the integrated circuit device 12 may determine a flow ID and feature extraction parameters associated with the packets (e.g., using the classification circuitry 160). For example, the feature extraction parameters may include types of features to extract from the packets, such as header information (e.g., source and/or destination Internet Protocol (IP) address or ports, protocols, and so on), timing information (e.g., arrival time, Time-to-Live, and so on), flow volume (e.g., number of packets or bytes), flow duration (e.g., time between first packet and last packet of a flow), inter-packet arrival time (IAT) (e.g., time between each packet in the flow), protocol information, and/or any other suitable feature. Further, the integrated circuit device 12 may determine whether the packets may initiate feature extraction, and if so, the integrated circuit device 12 may proceed to block 196.

At block 196, the integrated circuit device 12 may construct feature extraction headers based on the feature extraction parameters (e.g., using the header construction circuitry 170 of the extraction circuitry 100). Indeed, the integrated circuit device 12 may determine which features are applicable to the packets. Further, in some embodiments, the integrated circuit device 12 may organize and/or prepare data associated with the packets in a way that facilitates extraction of information associated with the feature extraction parameters. For example, the integrated circuit device 12 may identify header information (e.g., data) relevant to the extraction, aggregate header information from the packets, and so on.

At block 198, the integrated circuit device 12 may extract a packet number and a packet size based on the feature extraction headers. Moreover, at block 200, the integrated circuit device 12 may extract an IAT based on the feature extraction headers. It should be noted that block 198 and block 200 are merely illustrative and any other suitable feature may be extracted based on feature extraction parameters associated with a respective packet. Further, it should be noted that any feature may be extracted in any order.

Additionally, merging feature extraction with packet processing may enable splitting multiple read-modify-write operations among several stages of the packet processing pipeline 150 by creating multiple match action tables. Indeed, each stage of the packet processing pipeline may be associated with respective match action tables. For example, a first match action table associated with feature extraction for a first header, a second header, a third header, and a fourth header may be placed at a first stage (e.g., at the local terminating circuitry 158). As another example, a second match action table associated with feature extraction for a second header and a fourth header may be placed at a second stage (e.g., at the classification circuitry 160) instead of the first stage based on availability of parallel lookup budget. As yet another example, a third match action table may be placed at a third stage (e.g., the ACL or firewall circuitry 162) associated with feature extraction for a fifth header, a sixth header, and a seventh header.

As such, throughput within the system architecture of the integrated circuit device 12 may be increased. The match action tables may enable a reduction in Accelerator Functional Unit (AFU) resource utilization by reducing and/or restricting data movement. Indeed, the compiler of the integrated circuit device 12 may perform header and/or metadata liveliness analysis for reusability and minimization of metadata based on the match action tables. The metadata liveliness analysis may also apply to metadata received from the first program and/or the second program. Therefore, metadata may be reusable across multiple programs.

The integrated circuit device 12 may include on-chip (e.g., a fabric memory) and/or off-chip memory, which may be employed for varying latency, scale, and/or bandwidth of different applications. However, the on-chip memory may be limited and the off-chip memory may incur latency. Further, feature extraction may be stateful, and involve storage for historical data associated with a large number of flows (e.g., millions of flows). Therefore, the match action tables and/or flow register arrays may be placed based on overall memory utilization. In an embodiment, a user may adjust placement of the match action tables and/or the flow register arrays by indicating the placement within a program (e.g., the P4 program) implemented on the integrated circuit device 12. In another embodiment, the compiler of the integrated circuit device 12 may automatically determine the placement of the match action tables and/or the flow register arrays. Thus, if a memory usage exceeds a memory budget of the integrated circuit device 12, then the flow register arrays may be placed in the off-chip memory while the on-chip memory acts as a cache.

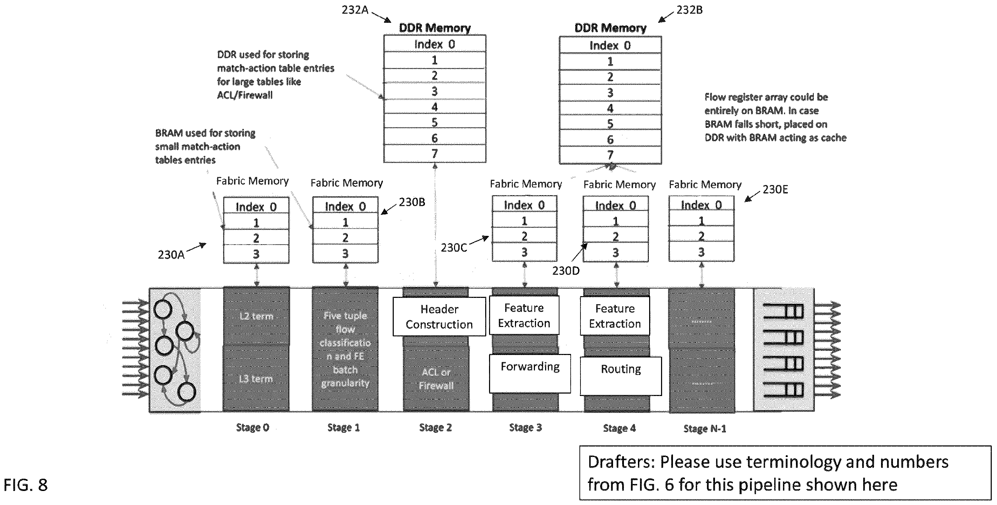

With the foregoing in mind, FIG. 8 is an example illustration of the extraction circuitry 100 and the packet processing pipeline 150 employing an on-chip memory and an off-chip memory, in accordance with an embodiment of the present disclosure. The integrated circuit device 12 may include an on-chip memory 230 (e.g., 230A, 230B, 230C, 230D, 230E) and may utilize off-chip memory 232 (e.g., 232A and 232B). For example, the on-chip memory 230 may include block random access memory (BRAM) and the off-chip memory 232 may include Double Data Rate (DDR) memory.

The on-chip memory 230 may enable storage of smaller match-action table entries. The off-chip memory 232 may enable storage of larger match-action table entries (e.g., an ACL or firewall table). Additionally or alternatively, the flow register arrays may be placed on the on-chip memory 230. However, when storage is insufficient, then the flow register arrays may be placed on the off-chip memory 232 and the on-chip memory 230 may act as the cache. Therefore, a hybrid storage system for the integrated circuit device 12 including utilization of the on-chip memory 230 and/or the off-chip memory 232 may enable additional storage for historical data associated with feature extraction for the large number of flows.

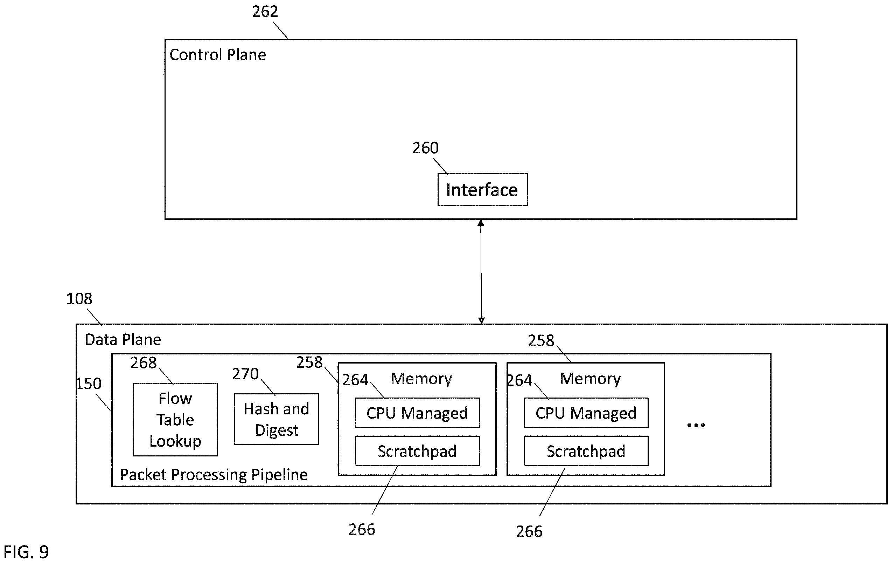

At times, when the CPU 104 adds new flow entries in the data plane circuitry 108, latency may be involved, which may result in a loss of the feature data. Thus, it may be desired to employ a local memory (e.g., on-chip memory 230) for storing flow data by partitioning the local memory. With the foregoing in mind, FIG. 9 is an example illustration of a memory partition 258 for the data plane circuitry 108. For example, the memory partition 258 may include a CPU managed memory 264 and/or a scratchpad memory 266. Further, the memory partition 258 may be configurable via an interface 260 control plane circuitry 262.

The CPU managed memory 264 may be managed by the CPU 104. For example, the CPU 104 may perform management of flow installation and/or mapping of the flow-tuples to the flow ID. Additionally or alternatively, the packet processing pipeline 150 may perform flow table lookup via a flow lookup table 268 and/or flow tuple hashing functions (e.g., stateless) via hash and digest circuitry 270. The flow lookup table 268 may enable assignment of a unique flow ID to each flow in the data plane circuitry 108. When the packet processing pipeline 150 is encountering a large number of flows, the packet processing pipeline 150 may employ the scratchpad memory 266 to map data to the flow ID. Thus, the scratchpad memory 266 may enable storage of flow data for any number of new flows until a flow entry is added.

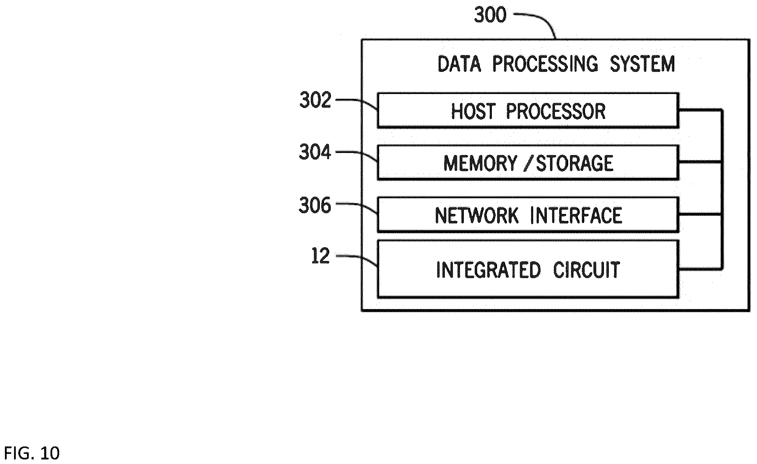

The integrated circuit device 12 described with respect to FIG. 4 may be a component included in a data processing system, such as a data processing system 300, shown in FIG. 10. The data processing system 300 may include the integrated circuit device 12, a host processor 302 (e.g., the CPU 104), memory and/or storage circuitry 304, and a network interface 306. The data processing system 300 may include more or fewer components (e.g., electronic display, user interface structures, application specific integrated circuits (ASICs)). The integrated circuit device 12 may be used to efficiently programmed to snoop a request from the host and prefill a cache with data based on the request to reduce memory access time. That is, the integrated circuit device 12 may accelerate functions of the host, such as the host processor 302. The host processor 302 may include any of the foregoing processors that may manage a data processing request for the data processing system 300 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 304 may include random access memory (RAM), read-only memory (ROM), one or more hard drives, flash memory, or the like. The memory and/or storage circuitry 304 may hold data to be processed by the data processing system 300. In some cases, the memory and/or storage circuitry 304 may also store configuration programs (e.g., bitstreams, mapping function) for programming the FPGA 70. The network interface 306 may allow the data processing system 300 to communicate with other electronic devices. The data processing system 300 may include several different packages or may be contained within a single package on a single package substrate. For example, components of the data processing system 300 may be located on several different packages at one location (e.g., a data center) or multiple locations. For instance, components of the data processing system 300 may be located in separate geographic locations or areas, such as cities, states, or countries.

The data processing system 300 may be part of a data center that processes a variety of different requests. For instance, the data processing system 300 may receive a data processing request via the network interface 306 to perform encryption, decryption, machine learning, video processing, voice recognition, image recognition, data compression, database search ranking, bioinformatics, network security pattern identification, spatial navigation, digital signal processing, or other specialized tasks.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [performing [a function]...", it is intended that such elements are to be interpreted under 35 U.S.C. 112(f). However, for any claims containing elements designated in any other manner, it is intended that such elements are not to be interpreted under 35 U.S.C. 112(f).

### EXAMPLE EMBODIMENTS

EXAMPLE EMBODIMENT 1. An integrated circuit system including data plane circuitry including a packet processing pipeline and extraction circuitry, wherein the extraction circuitry is configurable to extract one or more features of a packet via the packet processing pipeline. The integrated circuit system also includes inferencing circuitry configurable to perform machine learning inferencing based on the one or more features.

EXAMPLE EMBODIMENT 2. The integrated circuit system of example embodiment 1, wherein the packet processing pipeline is configurable to determine a flow identification and one or more extraction parameters.

EXAMPLE EMBODIMENT 3. The integrated circuit system of example embodiment 2, wherein the extraction circuitry is configurable to construct one or more extraction headers based on the one or more extraction parameters.

EXAMPLE EMBODIMENT 4. The integrated circuit system of example embodiment 3, wherein the extraction circuitry is configurable to extract the one or more features based on the one or more extraction headers.

EXAMPLE EMBODIMENT 5. The integrated circuit system of example embodiment 1, wherein the inferencing circuitry is configurable to apply one or more artificial intelligence (AI) machine learning (ML) models to the one or more features to generate a result.

EXAMPLE EMBODIMENT 6. The integrated circuit system of example embodiment 1, wherein the extraction circuitry includes feature extraction circuitry to extract the one or more features and feature vector transformation circuitry to perform pre-processing or normalization for the one or more features.

EXAMPLE EMBODIMENT 7. The integrated circuit system of example embodiment 1, including an interface configurable to receive the packet and provide the packet to the data plane circuitry or the extraction circuitry.

EXAMPLE EMBODIMENT 8. The integrated circuit system of example embodiment 1, including a hybrid storage system, wherein the hybrid storage system includes an on-chip memory and an off-chip memory.

EXAMPLE EMBODIMENT 9. The integrated circuit system of example embodiment 8, wherein the on-chip memory, the off-chip memory, or both, are configurable to store at least one of one or more match-action table entries and one or more flow register arrays.

EXAMPLE EMBODIMENT 10. The integrated circuit system of example embodiment 1, including a local memory configurable to be partitioned into a central processing unit (CPU) managed memory and a scratchpad memory.

EXAMPLE EMBODIMENT 11. The integrated circuit system of example embodiment 1, wherein the packet processing pipeline includes a first stage and a second stage, wherein the first stage is associated with a first match action table, and wherein the second stage is associated with a second match action table.

EXAMPLE EMBODIMENT 12. The integrated circuit system of example embodiment 1, wherein the one or more features include header information of the packet, timing information of the packet, flow volume of the packet, flow duration of the packet, inter-packet arrival time of the packet, protocol information of the packet, or any combination thereof.

EXAMPLE EMBODIMENT 13. Data plane circuitry including a packet processing pipeline including one or more stages, wherein the packet processing pipeline is configurable to determine one or more feature extraction parameters, and extraction circuitry configurable to extract one or more features of one or more packets based on the one or more feature extraction parameters via a number of stages of the one or more stages.

EXAMPLE EMBODIMENT 14. The data plane circuitry of example embodiment 13, wherein the extraction circuitry includes feature extraction circuitry and feature vector transformation circuitry.

EXAMPLE EMBODIMENT 15. The data plane circuitry of example embodiment 14, wherein the feature vector transformation circuitry is configurable to derive artificial intelligence (AI) machine learning (ML) features for the data plane circuitry, inferencing circuitry, or both.

EXAMPLE EMBODIMENT 16. The data plane circuitry of example embodiment 14, wherein the feature vector transformation circuitry is configurable to perform floating point analysis to determine a minimum standard deviation, a maximum standard deviation, a minimum normalization, a maximum normalization, a mean sum of squares, or any combination thereof.

EXAMPLE EMBODIMENT 17. A method for performing packet processing, including receiving, using extraction circuitry, a plurality of packets, extracting, using the extraction circuitry and a packet processing pipeline, one or more features of the plurality of packets, transmitting, using the extraction circuitry, the one or more features to inferencing circuitry, generating, using the inferencing circuitry, a result based on the one or more features.

EXAMPLE EMBODIMENT 18. The method of example embodiment 17, wherein generating the result based on the one or more features includes applying, using the inferencing circuitry, one or more models to the one or more features.

EXAMPLE EMBODIMENT 19. The method of example embodiment 17, including normalizing, using the extraction circuitry, data associated with the plurality of packets.

EXAMPLE EMBODIMENT 20. The method of example embodiment 17, including inferencing, using the inferencing circuitry, the plurality of packets per packet or per flow of the plurality of packets.

## Claims

1. An integrated circuit system, comprising:
data plane circuitry comprising a packet processing pipeline and extraction circuitry, wherein the extraction circuitry is configurable to extract one or more features of a packet via the packet processing pipeline; and
inferencing circuitry configurable to perform machine learning inferencing based on the one or more features.

2. The integrated circuit system of claim 1,
wherein the packet processing pipeline is configurable to determine a flow identification and one or more extraction parameters.

3. The integrated circuit system of claim 2,
wherein the extraction circuitry is configurable to construct one or more extraction headers based on the one or more extraction parameters.

4. The integrated circuit system of claim 3,
wherein the extraction circuitry is configurable to extract the one or more features based on the one or more extraction headers.

5. The integrated circuit system of any of the preceding claims,
wherein the inferencing circuitry is configurable to apply one or more artificial intelligence (AI) machine learning (ML) models to the one or more features to generate a result.

6. The integrated circuit system of any of the preceding claims,
wherein the extraction circuitry comprises feature extraction circuitry to extract the one or more features and feature vector transformation circuitry to perform pre-processing or normalization for the one or more features.

7. The integrated circuit system of any of the preceding claims,
further comprising an interface configurable to receive the packet and provide the packet to the data plane circuitry or the extraction circuitry.

8. The integrated circuit system of any of the preceding claims,
further comprising a hybrid storage system, wherein the hybrid storage system comprises an on-chip memory and an off-chip memory.

9. The integrated circuit system of claim 8,
wherein the on-chip memory, the off-chip memory, or both, are configurable to store at least one of one or more match-action table entries and one or more flow register arrays.

10. The integrated circuit system of any of the preceding claims,
further comprising a local memory configurable to be partitioned into a central processing unit (CPU) managed memory and a scratchpad memory.

11. The integrated circuit system of any of the preceding claims,
wherein the packet processing pipeline comprises a first stage and a second stage, wherein the first stage is associated with a first match action table, and wherein the second stage is associated with a second match action table.

12. The integrated circuit system of any of the preceding claims,
wherein the one or more features comprise header information of the packet, timing information of the packet, flow volume of the packet, flow duration of the packet, inter-packet arrival time of the packet, protocol information of the packet, or any combination thereof.

13. A method for performing packet processing, comprising:
receiving, using extraction circuitry, a plurality of packets;
extracting, using the extraction circuitry and a packet processing pipeline, one or more features of the plurality of packets;
transmitting, using the extraction circuitry, the one or more features to inferencing circuitry; and
generating, using the inferencing circuitry, a result based on the one or more features.

14. The method of claim 13,
wherein generating the result based on the one or more features comprises applying, using the inferencing circuitry, one or more models to the one or more features.

15. The method of claim 13 or 14,
further comprising normalizing, using the extraction circuitry, data associated with the plurality of packets.
